# EUROPÄISCHE PATENTSCHRIFT

(11) **EP 3 217 496 B1**
(45) Veröffentlichungstag und Bekanntmachung des Hinweises auf die Patenterteilung: **14.12.2022**
(21) Anmeldenummer: 16159605.1
(22) Anmeldetag: 10.03.2016
(51) Int. Cl.: H02G 3/04, E04F 19/04, H02G 3/34, H02G 3/06

(54) **KABELKANALABZWEIGUNG**
CABLE DUCT BRANCH
DÉRIVATION DE GOULOTTE ÉLECTRIQUE

(43) Veröffentlichungstag der Anmeldung: 13.09.2017
(73) Patentinhaber: GGK GmbH & Co. KG, 35753 Greifenstein (DE)
(72) Erfinder: MÜLLER, Eckhard, 35781 Weilburg (DE)
(74) Vertreter: advotec.

(56) Entgegenhaltungen:
- EP-A1- 0 267 079
- EP-A1- 1 750 339
- EP-A2- 1 530 274
- WO-A2-2006/076466
- DE-U1- 9 310 439
- GB-A- 932 453

## Beschreibung

Die Erfindung betrifft eine Kabelkanalabzweigung zur Montage in einer zwischen benachbarten Installationsflächen ausgebildeten Ecke gemäß Anspruch 1.

Kabelkanäle dienen zur Aufnahme elektrischer Leitungen, die insbesondere an nachträglich installierte Steckdosen und Schalter angeschlossen werden. Derartige Kabelkanäle, die regelmäßig in Bestandsgebäuden zur Kabelinstallation und Spannungsversorgung von nachträglich installierten elektrischen Verbrauchern benötigt werden, werden häufig als sogenannte Sockelleistenkanäle ausgeführt, die in Doppelfunktion neben einer eingehäusten Anordnung der Versorgungskabel die gleichzeitige Ausbildung von Fußleisten oder Sockelleisten ermöglichen.

Der nachträglichen Installation von Spannungsversorgungskabeln in Bestandsgebäuden kommt zunehmende Bedeutung zu, da der Elektrisierungsgrad bzw. die Ausstattung von Wohngebäuden mit elektrischen Aktuatoren ständig zunimmt, insbesondere in Kombination mit einer externen berührungslosen Ansteuerung der Geräte, die unter dem Begriff "Smarthome" für die Ansteuerung der Geräte via auf Smartphones herunter geladene Apps propagiert wird.

Nachträglich installierte Kabelkanäle können das Erscheinungsbild einer Raumwand maßgeblich beeinflussen. Insbesondere Kabelkanäle, die in Eckbereichen installiert sind, können sich erheblich auf die Raumgeometrie oder die Topographie einer Raumwand auswirken. Dies ist beispielsweise bei sogenannten Türumfahrungen oder senkrecht in Raumecken verlaufenden Kabelkanälen der Fall.

Aus der GB 932 453 A ist eine Kabelkanalabzweigung zur Verbindung von zwei in einer Raumecke aufeinanderstoßenden Kabelkanälen bekannt, wobei die Kabelkanalabzweigung Kabelkanalanschlüsse mit einem übereinstimmenden Anschlussquerschnitt aufweist.

Die EP 1 530 274 A2 zeigt eine Kabelkanalabzweigung, die zur Verbindung von einer Mehrzahl in einer Raumecke aufeinanderstoßenden Kabelkanälen dient, wobei die Kabelkanalabzweigung Kabelkanalanschlüsse aufweist, welche schalenförmig ausgebildet sind und Kanalbasen der Kabelkanäle in einem Anschlussbereich überdecken.

Aus der WO 2006/076466 A2 ist eine Kabelkanalabzweigung bekannt, die zur Verbindung von zwei in einer gemeinsamen Installationsebene angeordneten Kabelkanälen dient und hierzu im Anschlussquerschnitt übereinstimmend groß ausgebildete Kabelkanalanschlüsse aufweist.

Die EP 0 267 079 A1 zeigt eine Kabelkanalabzweigung, mit zwei in einer gemeinsamen Bauteilebene angeordneten Kabelkanalanschlüssen, die unterschiedlich große Anschlussquerschnitte aufweisen, wobei die Kabelkanalanschlüsse eine schalenförmige Kanalabdeckung ausbilden mit einem langen Schenkel und zwei parallel zueinander angeordneten kurzen Schenkeln, die im Anschlussbereich eine Kanalbasis an drei Seiten abdecken.

Aus der DE 93 10 439 U1 ist ein Kabelkanal mit einer Kabelkanalbasis bekannt, die benachbart einer Abzweigdose mit einem abzweigenden Kleinkanal versehen ist.

Aus der EP 1 750 339 A1 ist eine Kabelkanalabzweigung bekannt, die einen ersten Kabelkanalanschluss zum Anschluss eines ersten Kabelkanals und einen zweiten Kabelkanalanschluss zum Anschluss eines zweiten Kabelkanals aufweist, wobei die Kabelkanäle in einer gemeinsamen Bauteilebene angeordnet und mit übereinstimmend großen Anschlussquerschnitten versehen sind.

Der Erfindung liegt daher die Aufgabe zugrunde, eine Kabelkanalabzweigung vorzuschlagen, die eine im ästhetisch positiven Sinn möglichst unauffällige Installation von Kabelkanälen in Eckbereichen ermöglicht.

Zur Lösung dieser Aufgabe weist die erfindungsgemäße Kabelkanalabzweigung die Merkmale des Anspruchs 1 auf.

Die Ausgestaltung der Kabelkanalabzweigung mit Kabelkanalanschlüssen, die einen unterschiedlichen Anschlussquerschnitt aufweisen, ermöglicht einen harmonisch wirkenden Übergang von einem Sockelleistenkanal zu einem senkrecht hierzu auf der Raumwand verlaufenden Steigkanal mit reduziertem Querschnitt.

Erfindungsgemäß sind die Kabelkanalanschlüsse als schalenförmige Kanalabdeckung mit einem kurzen Schenkel und einem langen Schenkel ausgebildet, die jeweils eine in die Kabelkanalanschlüsse eingeführte Kanalbasis abdecken. So können die Kabelkanalanschlüsse zumindest anteilig die Kanalabdeckungen des Sockelleistenkanals und des Steigkanals ausbilden, so dass eine besonders weitreichende Integration der Kabelkanalabzweigung in die im Eckbereich zusammengeführten Kabelkanäle erreicht wird.

Erfindungsgemäß weist der zweite Kabelkanal eine Kanalbasis auf mit einer Montagewand und zwei an Längsrändern der Montagewand angeordneten Schenkeln, nämlich einem Außenschenkel, der benachbart dem kurzen Schenkel des zweiten Kabelkanalanschlusses angeordnet ist, und einem Wandschenkel, der zur Anlage gegen eine Installationsfläche dient, wobei der Außenschenkel in seinem Endbereich eine Rundung aufweist, die einer Rundung des zweiten Kabelkanalanschlusses im Übergang zwischen dem kurzen und dem langen Schenkel angepasst ist.

Die Kanalbasis des zweiten Kabelkanals weist im Übergang zwischen der Montagerückwand und dem Wandschenkel eine Abflachung zur Ausbildung eines Hohlraums zwischen der Kanalbasis und der zwischen den Installationsflächen ausgebildeten Ecke auf.

Bei einer weiteren Ausführungsform der Kabelkanalabzweigung ist entsprechend den Raumachsenrichtungen x, y, z ein dritter Kabelkanalanschluss vorgesehen, der einen identischen Anschlussquerschnitt wie der erste Kabelkanalanschluss aufweist, wobei sich der dritte Kabelkanalanschluss in x-Richtung, der erste Kabelkanalanschluss in y-Richtung und der zweite Kabelkanalanschluss in z-Richtung erstreckt. Nachfolgend werden bevorzugte Ausführungsformen der Erfindung anhand der Zeichnung näher erläutert.

Es zeigen:
- **Fig. 1:**: eine Kabelkanalabzweigung in einer ersten Ausführungsform;
- **Fig. 2:**: die in **Fig. 1** dargestellte Kabelkanalabzweigung in einer Schnittdarstellung gemäß Schnittlinienverlauf II-II in **Fig. 1****;**
- **Fig. 3:**: eine Kabelkanalabzweigung in einer zweiten Ausführungsform;
- **Fig. 4:**: eine Schnittdarstellung der in **Fig. 3** dargestellten Kabelkanalabzweigung gemäß Schnittlinienverlauf IV-IV in **Fig. 3****;**
- **Fig. 5:**: eine Kabelkanalabzweigung in Einzeldarstellung und Frontansicht;
- **Fig. 6:**: die in **Fig. 5** dargestellte Kabelkanalabzweigung in einer Rückansicht.

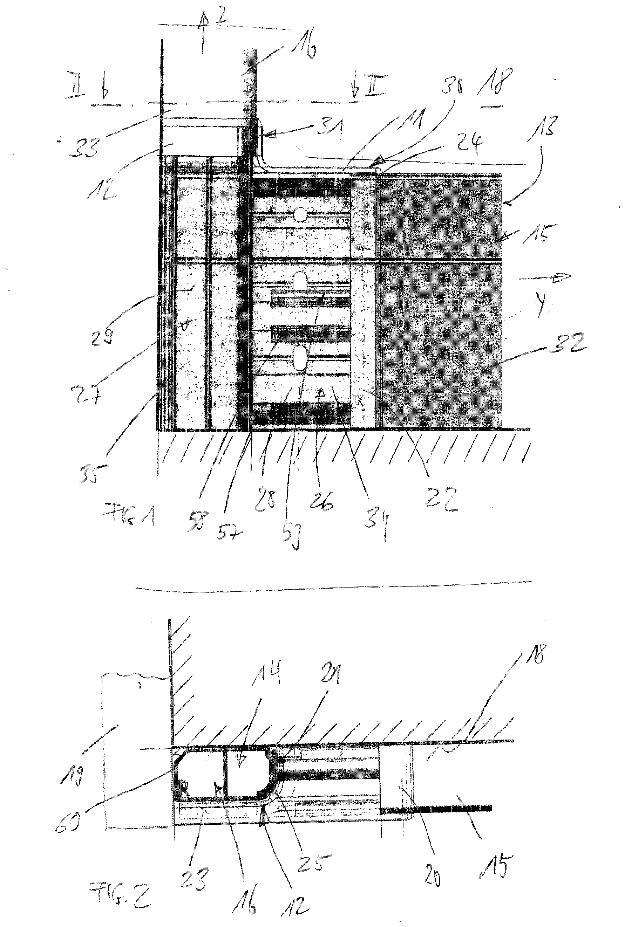

**Fig. 1** zeigt eine Kabelkanalabzweigung mit einem ersten Kabelkanalanschluss 11 und einem zweiten Kabelkanalanschluss 12, die in einer gemeinsamen Bauteilebene angeordnet sind und sich in den Raumachsenrichtungen y und z erstrecken.

Wie aus einer Zusammenschau der **Fig. 1** und **2** deutlich wird, weisen die Kabelkanalanschlüsse 11 und 12 unterschiedlich große Anschlussquerschnitte 13, 14 auf, wobei der Anschlussquerschnitt 14 des zweiten Kabelkanalanschlusses 12 kleiner ausgebildet ist als der Anschlussquerschnitt 13 des ersten Kabelkanalanschlusses 11. Dementsprechend dienen die Kabelkanalanschlüsse 11 und 12 zum Anschluss an unterschiedlich dimensionierte Kabelkanäle 15, 16, die entsprechend den Raumkoordinaten y und z in einer Ecke einer Installationsfläche 18 aufeinander treffen. Im vorliegenden Fall ist die Ecke dadurch ausgebildet, dass auf der Installationsfläche 18 eine Türzarge 19 angeordnet ist, die mit einer Seitenfläche eine Installationsfläche 60 ausbildet, sodass der in z-Richtung orientierte Kabelkanal 16 zur Ausbildung eines sogenannten Türumlaufs verwendet werden kann, bei dem im Kabelkanal 15 angeordnete Kabel im Bereich der Kabelkanalabzweigung in der Ecke umgelenkt und in den im Querschnitt kleiner bemessenen Kabelkanal 16 um die Türzarge herum geführt werden.

Wie aus einer Zusammenschau der **Fig. 1** und **2** hervorgeht, sind die Kabelkanalanschlüsse 11, 12 schalenförmig ausgebildet mit jeweils einem kurzen Schenkel 20 bzw. 21 und einem langen Schenkel 22 bzw. 23, die in einer Rundung 24 bzw. 25 ineinander übergehen.

Wie insbesondere **Fig. 1** zeigt, dienen die Kabelkanalabzweigung 10 bzw. die Kabelkanalanschlüsse 11 und 12 zur Abdeckung einer jeweiligen Kanalbasis 26 des Kabelkanals 15 bzw. einer Kabelkanalbasis 27 des Kabelkanals 16. Die Kabelkanalbasis 26 und die Kabelkanalbasis 27 sind jeweils an der Installationsfläche 18 mit einer Montagerückwand 28 bzw. 29 befestigt. Zur Ausbildung eines von außen sichtbaren Überdeckungsbereichs 30 bzw. 31 zwischen einer Kanalabdeckung 32 und dem Kabelkanalanschluss 11 sowie einer Kanalabdeckung 33 und dem Kabelkanalanschluss 12 sind die Kanalabdeckungen 32, 33 jeweils mit einem axialen Endrand in die Kabelkanalanschlüsse 11, 12 eingeführt, wobei im Übrigen die Kabelkanalanschlüsse 11, 12 Kanalabdeckungen für darunter liegende axiale Endabschnitte 34, 35 der Kanalbasis 26 und der Kanalbasis 27 ausbilden.

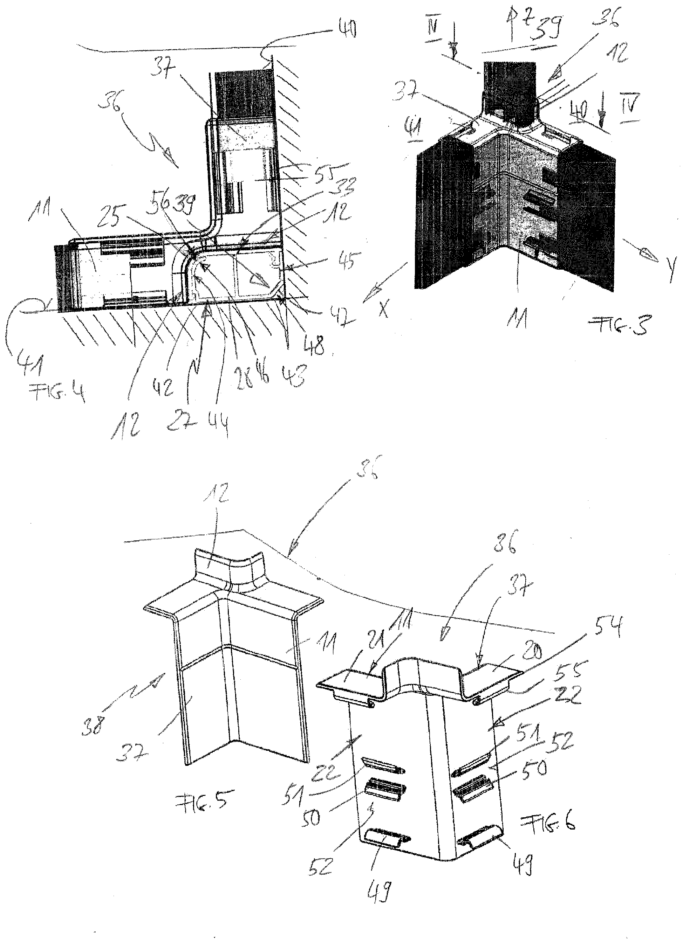

Die in den **Fig. 3** bis **6** dargestellte Ausführungsform einer Kabelkanalabzweigung 36 unterscheidet sich von der in den **Fig. 1** und **2** dargestellten Kabelkanalabzweigung durch die Ergänzung mit einem dritten Kabelkanalanschluss 37, der, wie insbesondere in **Fig. 3** dargestellt ist, die Kabelkanalanschlüsse 11 und 12, die in y- bzw. z-Richtung verlaufen, in x-Richtung ergänzt. Der Kabelkanalanschluss 37 weist einen identischen Anschlussquerschnitt 38 auf wie der Kabelkanalanschluss 11. Wie insbesondere in **Fig. 4** dargestellt, ist die Kabelkanalabzweigung 36 zur Installation in einer Raumecke 39 bestimmt, in der eine erste Installationsfläche 40 und eine zweite Installationsfläche 41 zur Ausbildung der Raumecke 39 aufeinander stoßen.

Wie **Fig. 4** zeigt, dient der Kabelkanalanschluss 12 zur Aufnahme des Kabelkanals 16, dessen Kanalbasis 27 zwei an Längsrändern 42, 43 der Montagerückwand 28 angeordnete Schenkel aufweist, nämlich einen Außenschenkel 44 und einen Wandschenkel 45, der zur Anlage gegen die Installationsfläche 40 dient. Der Außenschenkel 44 weist eine dem mit der Rundung 25 versehenen Übergang zwischen dem kurzen Schenkel 21 und dem langen Schenkel 23 des zweiten Kabelkanalanschlusses 12 angepasste Rundung 46 auf. Zwischen dem Außenschenkel 44 der Kanalbasis 27 und dem Kabelkanalanschluss 12 ist in dem Überdeckungsbereich 31 die mit einer entsprechenden Rundung 56 versehene Kanalabdeckung 33 aufgenommen, sodass unter ästhetischen Gesichtspunkten der Kabelkanal 16 als wesentlich weniger störend wahrgenommen wird als wenn der Kabelkanal 16 einen im Wesentlichen symmetrischen Querschnitt aufweisen würde, mit einer mehr oder weniger scharfkantigen Eckenausbildung anstatt der Rundung 46.

Weiterhin weist die Kanalbasis 27 im Übergang von der Montagerückwand 29 zum Wandschenkel eine Abflachung 47 auf, die sicherstellt, dass die Kanalbasis 27 auch bei geometrisch ungenauer Ausführung der Raumecke 39 wegen des zwischen der Abflachung 47 und der Raumecke 39 ausgebildeten Hohlraums 48 sowohl mit der Montagerückwand 29 als auch mit dem Wandschenkel 45 gegen die Installationsfläche 41 bzw. 40 positioniert werden kann.

Aus der **Fig. 6**, die die Kabelkanalabzweigung 36 in einer Rückansicht zeigt, wird deutlich, dass die langen Schenkel 22 der Kabelkanalanschlüsse 11 und 37 auf einer Innenseite 52 mit Rasteinrichtungen 49, 50 und 51 versehen sind, die mit entsprechenden Gegenrasteinrichtungen 57, 58, 59 der Kanalbasis 26 (**Fig. 1**) zusammen wirken, und die kurzen Schenkel 20 der Kabelkanalanschlüsse 11, 37 an einem Längsrand 54 mit einer Rasteinrichtung 55 versehen sind, die einen am oberen Längsrand der Montagerückwand 28 der Kanalbasis 26 ausgebildeten, hier nicht näher dargestellten Rastrand hintergreift.

## Patentansprüche

1. Kabelkanalabzweigung ( 36) zur Montage in einer zwischen benachbarten Installationsflächen (18, 60) ausgebildeten Ecke mit einem ersten Kabelkanalanschluss (11) zum Anschluss eines ersten Kabelkanals (15) und einem zweiten Kabelkanalanschluss (12) zum Anschluss eines zweiten Kabelkanals (16), wobei die Kabelkanalabzweigung den ersten Kabelkanal (15) und den zweiten Kabelkanal (16) umfasst, wobei der zweite Kabelkanalanschluss in einer gemeinsamen Bauteilebene mit dem ersten Kabelkanalanschluss ausgebildet ist und sich senkrecht zum ersten Kabelkanalanschluss erstreckt, wobei die Kabelkanalanschlüsse (11, 12) als schalenförmige Kanalabdeckung mit einem kurzen Schenkel (20, 21) und einem langen Schenkel (22, 23) ausgebildet sind, derart, dass die Kabelkanalanschlüsse jeweils eine in die Kabelkanalanschlüsse eingeführte Kanalbasis (26, 27) abdecken wobei der zweite Kabelkanalanschluss (12) einen Anschlussquerschnitt (14) zur Aufnahme des Kabelkanals (16) aufweist, der kleiner ausgebildet ist als der Anschlussquerschnitt (13) des ersten Kabelkanalanschlusses (11), wobei der zweite Kabelkanal (16) eine Kanalbasis (27) aufweist mit einer Montagerückwand (29) und zwei an Längsrändern (42, 43) der Montagerückwand angeordneten Schenkeln, nämlich einem Außenschenkel (44), der benachbart dem kurzen Schenkel (21) des zweiten Kabelkanalanschlusses (12) angeordnet ist, und einem Wandschenkel (45), der zur Anlage gegen eine Installationsfläche (60) dient, wobei der Außenschenkel in seinem Endbereich eine Rundung (46) aufweist, die einer Rundung (25) des zweiten Kabelkanalanschlusses im Übergang zwischen dem kurzen Schenkel (21) und dem langen Schenkel (23) angepasst ist, wobei die Kanalbasis (27) des zweiten Kabelkanals (16) im Übergang zwischen der Montagerückwand (29) und dem Wandschenkel (45) eine Abflachung (47) zur Ausbildung eines Hohlraums (48) zwischen der Kanalbasis (27) und der zwischen den Installationsflächen (18, 60) ausgebildeten Ecke aufweist.

2. Kabelkanalabzweigung nach Anspruch 1, wobei entsprechend den Raumachsenrichtungen x, y, z ein dritter Kabelkanalanschluss (37) vorgesehen ist, der einen identischen Anschlussquerschnitt (13) wie der erste Kabelkanalanschluss (11) aufweist, wobei sich der dritte Kabelkanalanschluss (37) in x-Richtung, der erste Kabelkanalanschluss (11) in y-Richtung und der zweite Kabelkanalanschluss (12) in z-Richtung erstreckt.

## Claims

1. A cable duct branch (36) for being mounted in a corner formed between adjacent installation surfaces (18, 60), said cable duct branch (36) comprising a first cable duct connection (11) for the connection of a first cable duct (15) and a second cable duct connection (12) for the connection of a second cable duct (16), wherein the cable duct branch comprises the first cable duct (15) and the second cable duct (16), wherein the second cable duct connection is realized in a shared component plane with the first cable duct connection and extends perpendicularly to the first cable duct connection, wherein the cable duct connections (11, 12) are realized as a shell-shaped duct cover having a short leg (20, 21) and a long leg (22, 23) in such a manner that each of the cable duct connections covers a duct base (26, 27) inserted into the cable duct connections, wherein
the second cable duct connection (12) has a connection cross section (14) for accommodating the cable duct (16) which is realized smaller than the connection cross section (13) of the first cable duct connection (11), wherein the second cable duct (16) has a duct base (27) having a mounting back wall (29) and two legs disposed at longitudinal edges (42, 43) of the mounting back wall, namely an outer leg (44) which is disposed adjacently to the short leg (21) of the second cable connection (12) and a wall leg (45) which serves for abutting against an installation surface (60), wherein the outer leg has a curve (46) in its end region which is adapted to a curve (25) of the second cable duct connection in the transition between the short leg (21) and the long leg (23), wherein the duct base (27) of the second cable duct (16) has a flattening (47) in the transition between the mounting back wall (29) and the wall leg (45) in order to form a hollow space (48) between the duct base (27) and the corner formed between the installation surfaces (18, 60).

2. The cable duct branch according to claim 1,
wherein
in accordance with the spatial axis directions x, y, z, a third cable duct connection (37) is provided which has an identical connection cross section (13) to that of the first cable duct connection (11), wherein the third cable duct connection (37) extends in the x-direction, the first cable duct connection (11) extends in the y-direction and the second cable duct connection (12) extends in the z-direction.

## Revendications

1. Branchement (36) de conduit de câbles pour le montage dans un coin formé entre des surfaces d'installation (18, 60) adjacentes, ledit branchement (36) de conduit de câbles comprenant une première liaison (11) de conduit de câbles pour la liaison d'un premier conduit de câbles (15) et une deuxième liaison (12) de conduit de câbles pour la liaison d'un deuxième conduit de câbles (16), dans lequel le branchement de conduit de câbles comprend le premier conduit de câbles (15) et le deuxième conduit de câbles (16), dans lequel la deuxième liaison de conduit de câbles est réalisée dans un plan de composants commun avec la première liaison de conduit de câbles et s'étend perpendiculairement à la première liaison de conduit de câbles, dans lequel les liaisons (11, 12) de conduit de câbles sont réalisées comme couverture de conduit en forme de coquille ayant une jambe courte (20, 21) et une jambe longue (22, 23) de manière que chacune des liaisons de conduit de câbles couvre une base de conduit (26, 27) insérée dans les liaisons de conduit de câbles,
dans lequel
la deuxième liaison (12) de conduit de câbles a une section transversale (14) de liaison pour loger le conduit de câbles (16) qui est réalisé plus petit que la section transversale (13) de liaison de la première liaison (11) de conduit de câbles, dans lequel le deuxième conduit de câbles (16) a une base de conduit (27) ayant une paroi (29) arrière de montage et deux jambes disposées sur des bords longitudinaux (42, 43) de la paroi arrière de montage, à savoir une jambe extérieure (44) qui est disposée de manière adjacente à la jambe courte (21) de la deuxième liaison (12) de conduit de câbles et une jambe de paroi (45) qui sert à prendre appui contre une surface d'installation (60), dans lequel la jambe extérieure a un arrondi (46) dans sa zone d'extrémité, ledit arrondi (46) étant adapté à un arrondi (25) de la deuxième liaison de conduit de câbles dans la transition entre la jambe courte (21) et la jambe longue (23), dans lequel la base de conduit (27) du deuxième conduit de câbles (16) a un aplatissement (47) dans la transition entre la paroi (29) arrière de montage et la jambe de paroi (45) pour former un espace creux (48) entre la base de conduit (27) et le coin formé entre les surfaces d'installation (18, 60).

2. Branchement de conduit de câbles selon la revendication 1,
dans lequel
conformément aux directions des axes de l'espace des x, y, z, une troisième liaison (37) de conduit de câbles est prévue qui a une section transversale (13) de liaison identique à celle de la première liaison (11) de conduit de câbles, dans lequel la troisième liaison (37) de conduit de câbles s'étend dans la direction des x, la première liaison (11) de conduit de câbles s'étend dans la direction des y et la deuxième liaison (12) de conduit de câbles s'étend dans la direction des z.
